# EUROPEAN PATENT SPECIFICATION

(11) **EP 1 782 928 B1**
(45) Date of publication and mention of the grant of the patent: **07.05.2008**
(21) Application number: 05110485.9
(22) Date of filing: 08.11.2005
(51) Int. Cl.: B25J 13/06, B25J 19/06

(54) **An industrial robot system with more than one TPU**
Industrierobotisches System mit mehr als einem Handbediengerät
Système robotique industriel comprenant plus d'un pendant d'apprentissage portable

(43) Date of publication of application: 09.05.2007
(73) Proprietor: ABB AB, 721 83 Västerås (SE)
(72) Inventor: Sjöberg, Ralph, 723 55 Västerås (SE)
(74) Representative: Reyier, Ann-Mari

(56) References cited:
- EP-A- 1 514 650
- WO-A-20/05065894
- US-A1- 2005 052 148
- PATENT ABSTRACTS OF JAPAN vol. 2003, no. 12, 5 December 2003 (2003-12-05) & JP 2005 118967 A (YASKAWA ELECTRIC CORP), 12 May 2005 (2005-05-12)

## Description

### FIELD OF THE INVENTION

The present invention relates to an industrial robot system including an industrial robot comprising at least one manipulator and a control unit for controlling the manipulator, and at least two portable operator control devices, called TPUs. The invention also relates to a method for controlling such a robot system.

### PRIOR ART

An industrial robot is programmed to carry out work along an operating path. In order to program or teach the robot the work, the robot is manipulated to positions along the desired operating path. These positions are stored as instructions in a memory in the control unit. During operation of the robot, the program instructions are executed, thereby making the robot operate as desired.

The person controlling a robot is denoted an operator. In the following the words user and operator are used synonymously. An industrial robot can be operated in different operation modes. For example, when the robot is put in manual operation mode, the robot is controlled by means of a portable operator control device, generally denoted a Teach Pendant Unit, and called hereafter a TPU. The TPU is used for manually controlling the robot, for example to teach or program the robot to follow an operating path. The TPU may also be used for monitoring the robot program, changing certain variables in the program, starting, stopping and editing the program. When the robot is switched to automatic mode, it is no longer possible to manually move the robot with the joystick. However, it is still possible to start and stop the robot program.

A TPU comprises operator control means, for example a joystick, a ball, a set of buttons or any combination thereof, a visual display unit, and safety equipment for protecting a user against injury during manual control of the robot, such as an enabling device and a stop device, for example an emergency stop button, or a conditional stop button. The enabling device is for example a switch or a push button, which has to be pressed by the operator to enable manual control of the robot by the TPU. For safety reasons the TPU normally is provided with either an emergency stop button, which makes it possible for the operator to unconditionally stop the robot at any time by pushing the button, or a conditional stop button, which makes it possible for the operator to conditionally stop the robot. The TPU is either wirelessly or physically connected to the control unit through a cable. If the TPU is wirelessly connected to the control unit, the TPU communicates with the control unit via a data link.

During a login procedure the operator is logged in to the control unit of the robot and the TPU is connected to the control unit. Further, the TPU is connected to the safety system of the robot. To connect the TPU to the safety system of the robot includes activating the enabling function of the robot, which means to put the enabling device of the TPU into function. Thus, when the enabling function is activated, the enabling device of the TPU is enabled and it is possible to move the robot, for example by means of the joystick, when the enabling button of the TPU is pressed.

To connect the TPU to the safety system of the robot also includes activating the emergency stop function of the robot, which for example means to put the emergency stop button of the TPU into function for the robot. When the emergency stop function of the TPU is activated, the emergency stop button of the TPU is enabled and it is possible to emergency stop the robot by pushing the emergency stop button. If the emergency stop function of the TPU is deactivated the emergency stop button of the TPU is disabled and nothing happens when the emergency stop button is pressed.

When the operator no longer desires to control the robot, he has to disconnect the TPU from the control unit of the robot by sending a logout order from the TPU to the control unit. The logout order logs out the operator from the control unit and deactivates the safety system of the TPU, which means that the safety equipment of the TPU is disabled.

For security reasons the manipulator is often placed into a robot cell. The robot cell is usually an enclosed area, for example a fence having a gate encloses the robot cell. The safety regulation for the robot specifies that the TPU must be connected to the safety system of the robot when the TPU is inside the robot cell, and to avoid accidents and unintended emergency stops of the robot, the safety equipment of the TPU should be out of function as long as the TPU is outside the robot cell.

Sometimes it is necessary to be more than one user in the cell at the same time. If only one TPU is present in the robot cell, it is only the user with the TPU who has control over the robot and thus over what is happening in the cell, This could be very dangerous for the other users present in the cell, For example, if the user is testing a robot installation it can be very dangerous for the other users to be in the cell because of movements of the mechanical arms of the robot.

EP1 514 650 discloses a robot system according to the preamble of claim 1 including a plurality of TPUs. One of the TPUs is provided with a main enabling switch and the others are provided with subordinated enabling switches. In order to enabling movement of the robot both the main enabling switch and the subordinated enabling switches have to be closed.

### OBJECTS AND SUMMARY OF THE INVENTION

The object of the present invention is to improve the safety in a robot cell when more than one person is present in the cell at the same time.

According to one aspect of the invention this object is achieved with an industrial robot system as defined in claim 1.

The invention makes it possible for two or more TPU/s to be simultaneously connected to the safety system of the robot control unit. This means that all users in the robot cell could be provided with a TPU connected to the safety system. To increase the safety, only one user is the master and is allowed to move the robot. The other users are not allowed to move the robot, only to affect the safety system. To allow any movement of the robot, all users in the cell must simultaneously activate the enabling device, for example by pressing the enabling button. If one of the users releases the enabling button, i.e. deactivate the enabling device; the Master TPU is no longer allowed to move the manipulator. Accordingly, the safety for the other users in the cell is increased.

The number of TPU/s simultaneously connected to the control unit may vary from time to time, in dependence on the number of users in the robot cell. Of course, the system also allows one TPU having master authority to be alone in the cell, and to control the movement of the manipulator, independent of any other TPU.

Preferably, the control unit is adapted to receive information from one or more of the TPUs about which of the simultaneously connected TPUs has the master authority and accordingly is the Master TPU. Thus, it is possible for the users to decide which of the TPUs is to be the Master TPU. For example, which of the TPUs in the cell is to be Master TPU could be negotiated at login to the control unit. Alternatively, it is decided beforehand which TPU is the Master TPU and this information is previously stored in the control unit.

According to an embodiment of the invention, the safety equipment comprises an emergency stop device and the control unit is adapted to receive information of from all TPUs, which are simultaneously connected to the safety system, about whether the emergency stop device of the TPU is activated or deactivated, and to emergency stop the robot, if the received information indicates that the emergency stop device of at least one of the TPUs, connected to the safety system, is activated. This embodiment further increases the safety in a cell with more than one user, since it makes it possible to provide all the users with a TPU having an functioning emergency stop device, which works independently of the emergency stop devices of the other TPUs. Thus, it is possible for all the users in the cell to emergency stop the robot.

According to the invention, the control unit is adapted to upon order change authorities between the TPUs, so that the Master TPU does no longer have a master authority and another of the TPU/s connected to the safety system instead becomes the Master TPU and have the master authority. In some situations it is a desire to switch the manual control of the robot to another user in the cell. This embodiment makes it possible to change authorities between the TPUs so that another of the TPUs in the cell instead becomes the Master TPU.

According to an embodiment of the invention, the system allows TPUs connected to the safety system to be assigned at least two different levels of authority, wherein the highest level of authority is a master authority. For example, the master authority allows the user to start and stop a robot program, and to move the robot by means of the joystick. For example, a second level of authority allows the user to view data, but not to control the robot. Due to the connection to the safety system, the safety equipment of the TPU is enabled and thereby the enabling device and the emergency stop device are in function.

According to an embodiment of the invention, the system is adapted to allow a remote TPU to be connected to the control unit, but not to the safety system. The remote TPU is assigned a third level of authority. When a TPU is connected to the control unit, it is to be understood that a communication link is established between the TPU and the control unit. For example, the third level of authority may allow the user to communicate with the control unit and to view data from the control unit, but not to control the movements of robot, or to affect the safety system. This embodiment makes it possible to connect a TPU located outside the robot cell to the control unit and allows the user of the TPU to view data from the control unit. However, for safety reasons, the remote TPU is not allowed to affect the movements of the manipulator, to emergency stop the robot, or to enable or disable movement of the manipulator. It would be very dangerous if a TPU located outside the robot cell were allowed to control the movements of the manipulator if there are other users inside the robot cell.

According to an embodiment of the invention, the control unit is adapted to check whether a move command, received from one of the TPUs, is issued by the Master TPU, and to move the robot according to the move instruction if the move command is issued by the Master TPU, and to not move the robot if the move command is issued by a TPU which is not the Master TPU. In order to improve the safety, each received move command is checked to find out whether it was issued by the Master TPU or not. If a move command is not issued by the Master TPU, the command is not executed.

According to an embodiment of the invention, the control unit comprises a storage area for storing the identity and authority of the TPU:s and the control unit is adapted to receive and store information about the identity and authority from each TPU connected to the control unit. Preferably, the control system is adapted to store the new authorities of the TPUs in the storage area, upon the order to change the authorities between the TPU:s. Thus, the control unit will always have an updated authority matrix, which makes it easy keep track on which TPUs are connected to the control unit at the moment and the authorities of the connected TPUs.

According to an embodiment of the invention, the control unit is adapted to receive move commands from the TPUs, wherein each move command includes information about the identity of the TPU that issued the move command, to check whether the identity, included in the move command, is equal to the stored identity of the Master TPU, and to move the robot according to the move instruction if the identity included in the move command is equal to the identity of the Master TPU, and to not move the robot if the identity included in the move command is not equal to the identity of the Master TPU. Each move command issued by a TPU should contain the identity of the TPU, and the control unit checks whether a move command received from one of the TPUs, is issued by the Master TPU, by comparing the identity contained in the received move command with the identity of the Master TPU stored in the authority matrix.

The invention is applicable for TPUs, which are physically connected to the control unit by means of cables as well as for wirelessly connected TPUs. However, due to the risk for twisted cables, when more than one TPU is in the cell at the same time, it is to prefer to if the TPUs are wirelessly connected to the control unit.

According to one aspect of the invention this object is achieved with a method as defined in claim 12.

### BRIEF DESCRIPTION OF THE DRAWINGS

The invention will now be explained more closely by the description of different embodiments of the invention and with reference to the appended figures.
- Fig. 1: shows an industrial robot system according to an embodiment of the invention.
- Fig. 2: shows schematically a block diagram of a robot control unit according to an embodiment of the invention.
- Fig. 3: shows an example of an enabling circuit.
- Fig. 4: shows an example of an emergency stop circuit.
- Fig. 5: shows schematically a block diagram of a TPU according to an embodiment of the invention.
- Figs. 6a-d: show flow diagrams of a method for controlling an industrial robot system, according to an embodiment of the invention.

### DETAILED DESCRIPTION OF PREFERRED EMBODIMENTS OF THE INVENTION

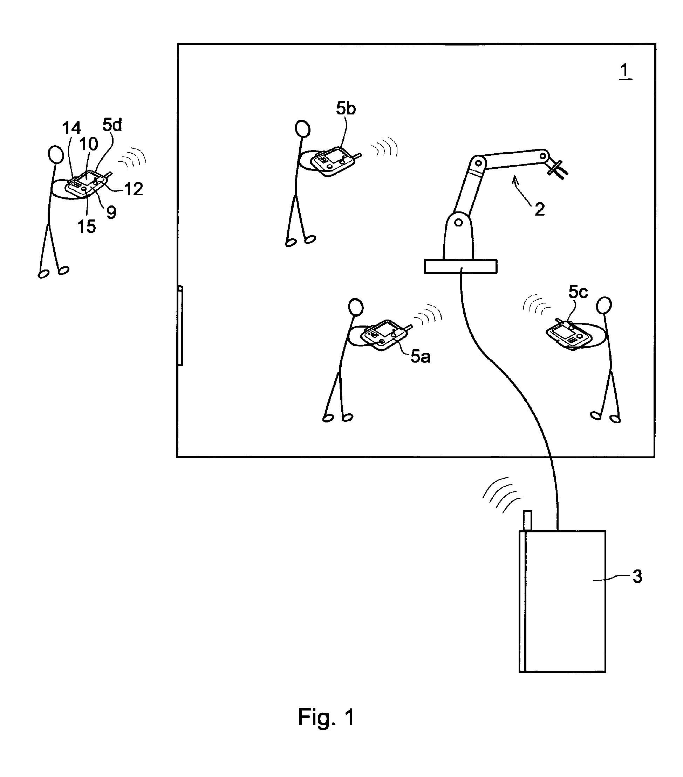

Figure 1 shows an industrial robot system comprising an industrial robot located within a robot cell 1 surrounded by a safety arrangement, for example a fence or a photo-electric trip device. A robot cell is a defined safe area surrounding the manipulator. Within the robot cell certain safety rules are applied. One safety rule is for example that the safety equipment of the TPU must function within the robot cell. The robot system includes a manipulator 2, a control unit 3 for controlling the manipulator, and a plurality of portable operator control devices 5a-d, in the following denoted TPUs (Teach Pendant Unit) for teaching and manually operating the manipulator. The TPUs are communicating with the control unit 3 via a wireless data link. It should be noted that in another embodiment of the invention, the TPUs are connected to the control unit 3 by means of cables.

Each TPU 5a-d comprises a portable box 9 including a display screen 10, function keys, a joystick 12, an enabling device 14 and an emergency stop device 15. The TPU also includes an antenna for wireless communication with the control unit 3. The function keys permit the operator to select various states for the control system. The joystick 12 is used for controlling the movement of the manipulator when the robot is in manual operation mode. The enabling device 14 comprises a button, which has to be pressed down by the operator to enable control of the robot by the TPU. When the operator releases the button of the enabling device 14, the robot can no longer be operated by the TPU. The emergency stop button 15 causes an emergency stop upon activation. The enabling device 14 and the emergency stop device 15 is a part of the safety equipment of the TPU.

In figure 1, there are four operators, each equipped with a TPU 5a-d connected to the control unit 3. It is to be understood that connected to the TPU means that the operator has been logged in to the control unit 3 and is able to communicate with the control unit 3 and to send and receive data from the control unit. Three of the TPUs 5a-c are located inside the robot cell and one TPU 5d is located outside the cell.

For safety reasons, the number of TPUs allowed to be simultaneously connected to the control unit, or to the safety system, could be limited.

In this embodiment of the invention, the robot system allows a TPU to be assigned three different levels of authorities: master authority, safety authority, and remote authority. The master authority is the highest level of authority and allows the TPU to be connected to the safety system of the control unit, i.e. allows enabling of the safety equipment of the TPU, and allows the operator to manually operate the robot, for example to move the manipulator with the joystick, and to start and stop robot programs. The safety authority is a lower level of authority, and allows the TPU to be connected to the safety system of the control unit, to communicate with the control unit and view data from the control unit, but not to manually operate the robot. The remote authority is the lowest level of authority, and allows the user to communicate with the control unit and view data from the control unit, but does not allow the operator to manually operate the robot, and it does not allow the TPU to be connected to the safety system of the control unit, which means that the safety equipment of the TPU does not function.

According to the safety rules, a TPU located outside the robot cell must have the Remote authority, and a TPU located inside the robot cell must have either the Master authority or the Safety authority. However, only one of the TPUs located inside the cell is allowed to have the Master authority, the other TPUs inside the cell must have the safety authority. In this embodiment of the invention it is possible to change the authority so that another of the TPUs connected to the safety system become the Master TPU. For example, the operator communicates a desired authority to the control system during a login procedure. Which one of the TPUs is the master could be negotiated at the login procedure.

The control unit is adapted to receive and store information about which of the simultaneously connected TPUs has master authority and accordingly is Master TPU, to change the authority of the Master TPU to a lower level of authority, and to change the authority of another of the connected TPU to the master authority. The TPUs continuously send information about the status of the enabling devices, i.e. information about whether the enabling devices are activated or not, and information about the status of the emergency stop devices, i.e. information about whether the emergency stop devices are activated or not.

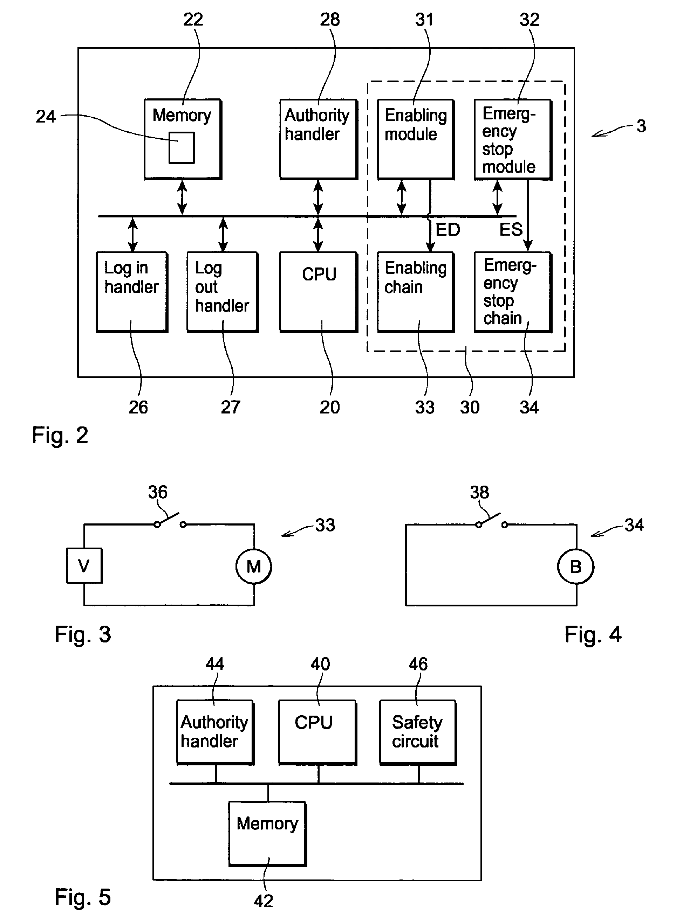

Figure 2 shows by means of a block diagram a robot control unit 3a according to an embodiment of the invention. The robot control unit includes communication means (not shown) for communicating with the TPUs, a processor unit 20, such as a central processing unit (CPU) for executing software modules of the invention and stored robot programs, memory means 22, including a storage area 24 for storing an authority matrix, a login module 26 for handling login of the TPUs to the control unit, a logout module 27 for handling logout of the TPUs from the control unit, a TPU authority handler 28, which updates the authority matrix upon order of change of authority, and checks whether a move command is issue by a TPU having the authority therefore, and a safety system 30.

Each TPU has a unique identity, which, for example, is transferred to the control unit together with the desired authority upon login to the control unit. The authority matrix is a list including the identity of all TPUs, which are connected to the control unit, and the authority of the TPUs. The login handler 26 receives the identity and authority of the TPU during the login procedure and stores the identity and authority of the TPU in the authority matrix. The logout handler 27 removes the identity and authority of the TPU from the authority matrix upon receiving a logout order and disconnects the TPU from the safety system 30. The login handler 26 is also adapted to check whether the user is authorized to login to the control system or not based on stored information about authorization of the users.

The authority handler 28 is adapted to, upon order from the TPU:s, change the authorities between two of the TPUs, one of which is the Master TPU, so that the Master TPU does no longer have the master authority, and the other TPU instead becomes the Master TPU and accordingly has the master authority. The authority handler receives information from at least one of the two TPUs about the change of authorities and the identity of the new Master TPU, and based thereon updates the authority matrix with the new authorities. In order to increase the safety, it is advantageous if one of the two TPUs, which are changing authorities, sends an change order to the control unit and the other TPU sends a confirmation of the change to the control unit before the authorities are changed.

The authority handler 28 is also adapted to receive move commands from the TPUs, wherein the move commands includes information about the identity of the TPU that issued the move command, to check whether the identity, included in the move command, is equal to the identity of the Master TPU, as stored in the authority matrix, and to allow the robot to move according to the move instruction, if the identity included in the move command is equal to the identity of the Master TPU, and to not allow the robot to move if the identity included in the move command is not equal to the identity of the Master TPU. A move command is for example a move command issued by the joystick 12, an order to start running a robot program including move instructions, or an order to stop running the robot program. The authority handler sends information to the CPU about whether or not the move command is allowed to be executed or not.

The safety system 30 of the control unit includes an enabling module 31, an emergency stop module 32, an enabling chain 33, and an emergency stop chain 34. The enabling module and the emergency stop module holds information about which TPU:s are connected to the safety system. The enabling module continuously, or repeatedly within a certain time frame, receives information from all the TPUs, which are simultaneously connected to said safety system, about whether the enabling devices of the TPUs are activated or deactivated. The enabling module generates an enabling signal ED indicating whether manual movement of the robot is permitted or not. The enabling signal ED is transferred to the enabling chain 33. The enabling signal ED enables manual movement of the manipulator if the received information indicates that the enabling devices for all TPU's connected to the safety system are simultaneously activated and does not enable manual movement of the manipulator if the information received indicates that at least one of the enabling devices connected to the safety system is deactivated. Information about the enabling signal ED is also communicated to the CPU. If the authority handler has allowed a move command, and the enabling signal enables manual movement, the CPU executes the move command; otherwise the move command is not executed.

An example of the enabling chain 33 is shown in figure 3. The enabling chain 33 comprises a switch 36 that is opened or closed in dependence on the enabling signal EC. The enabling chain 33 is connected to the motors M of the robot. When the enabling chain is broken, the brakes are applied to the motors and the robot no longer controls the motors. The enabling chain has to be activated before any user is allowed to operate the robot by the TPU. The enabling chain is for example activated when manual operation mode of the robot is selected. Activation of the enabling chain means that manual operation of the robot is enabled. Accordingly, when the enabling chain is activated, the enabling devices of the TPUs connected to the safety system is operatable. If the enabling circuit has been activated, the enabling chain 33 is opened or closed in dependence on whether the enabling signal ED enables manual movement of the robot or not. Accordingly, it is only possible to operate the robot by means of the Master TPU if the enabling devices for all TPUs connected to the safety system are simultaneously activate by the users.

The emergency stop module 32 continuously receives information from all the TPUs, which are simultaneously connected to the safety system, about whether the emergency stop devices of the TPUs are activated or deactivated. The emergency stop module generates an emergency stop signal EV, indicating whether the robot should be emergency stopped or not. The emergency stop signal ES indicates that the robot shall be emergency stopped, if the emergency stop device of at least one of the TPUs, connected to the safety system, is activated, and indicates that the robot shall not be emergency stopped if non of the emergency stop device connected to the safety system is activated. The emergency stop signal ES is transferred to the emergency stop chain 34. An example of the emergency stop chain 34 is shown in figure 34. The emergency stop chain 34 comprises a switch 38 that is opened or closed in dependence on the emergency stop signal EV. The emergency stop chain 34 is connected to the brakes B of the robot. When emergency stop chain 34 is broken, the brakes are applied to the motors.

In this embodiment of the invention, the login handler 26, the logout handler 27, the authority handler 28, the enabling check module 31, and the emergency stop check module 32 are software modules. Alternatively they can be implemented in hardware or a combination of software and hardware.

Figure 5 shows by means of a block diagram a TPU 5a-d according to an embodiment of the invention. The TPU includes communication means (not shown) for communicating with the control unit 3, a central processor unit 40, memory means 42, an authority handler 44, and a safety circuit 46. The authority handler 44 handles authority issues, such as to communicate the desired authority to the control unit during the login procedure, to send an order about a change of the authority to the control unit, and to accept or deny a request regarding change of authority received from another TPU. The authority handler 44 also handles the communication with the operator regarding selection of level of authority and change of level of authority. The safety equipment includes a safety circuit 46 comprising the emergency stop button 15 and the enabling device 14, which both are switches. The safety circuit 46 is closed when the enabling device 14 is activated and the stop button 15 is not activated.

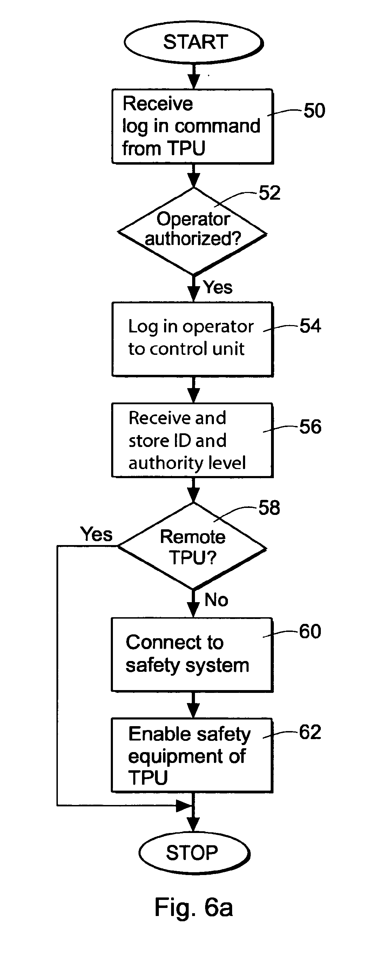

Figure 6a-e are a flow diagrams illustrating a method and a computer program for coupling a wireless TPU to a robot controller, according to an embodiment of the present invention. It will be understood that each block of the flow diagram can be implemented by computer program instructions, which are executed by the central processing unit 20 of the control unit. A presumption is that a communication link has been established between the TPUls and the control unit. The method according to the invention is event driven, which means that a certain sequence of method steps are executed based on a certain event. The events are for example: a login command is received from one of the TPUs, a move command is received from one of the TPUs, an emergency stop order is received from one of the TPUs, an order to change authority is received from one of the TPUs, and a logout command is received from one of the TPUs. In the following it will be described, with reference to the flow diagrams 6a-e, what will happen in the control unit when those events occurs.

Figure 6a shows the login procedure. When the operator picks up the TPU and begins to use it, he enters information about his identity and a desired level of authority to the system. The TPU sends a login command to the control unit including a request to connect the TPU to the control unit, the identity of the operator, a password, the identity of the TPU, and the desired level of authority of the TPU. The control unit receives the login command, block 50, and checks if the operator is authorized to be logged in to the control unit, block 52. If the check reveals that the operator is authorized and the password is correct the operator is logged in to and connected to the control unit, block 54. If the desired authority is the master authority, the authority handler 28 of the control unit checks whether any other TPU connected to the control unit already has been assigned the master authority. If so, the TPU is denied the master authority and is informed about that. If no other TPU has the master authority, or if a lower level of authority is claimed, the identity of the TPU and the level of authorization are stored in the authority matrix, block 56.

If the level of authority is a remote authority the login procedure is finished, otherwise the TPU is connected to the safety system, block 58, 60. Upon connection to the safety system, the identity of the TPU is communicated to the safety system. The safety system enables the safety equipment of the TPU, which means that the enabling device and the emergency stop device of the TPU is functioning, block 62. The safety equipment of a TPU with a remote authority does not function, i.e. it is not possible to emergency stop the robot by activating the emergency stop button on the TPU, and it is not possible to enabling motion of the manipulator by activating the enabling button.

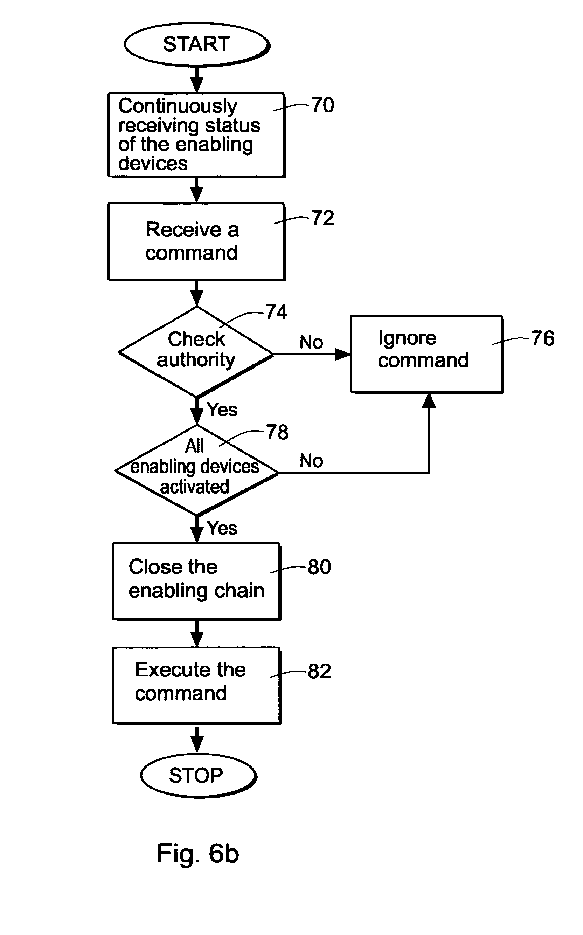

Figure 6b shows a procedure for handling move commands from the TPUs. The control unit continuously receives information about the status of the enabling devices from all TPU:s connected to the safety system, block 70. The status includes enabling device activated or deactivated. When the control unit receives a command from any of the TPUs, block 72, the control system is adapted to perform a check whether the TPU is allowed to issue this type of command or not according to its authority, block 74. Each command received from the TPU includes the identity of the TPU that issued the command. Information of the authority of the TPU, which issued the command, is found in the authority matrix. If the check shows that the TPU does not have the authority to issue the command, the command is ignored and the TPU is informed thereof, block 76.

For example, if the control system receives a command involving a movement of the manipulator, or any other command, which is only allowed to be issued by the Master TPU, the command is ignored if the authority check shows the TPU does not have the master authority, block 76. If the enabling devices for all TPUs connected to the safety system are activated, the enabling chain of the safety system is closed, block 78, 80, which means that it is possible to move the manipulator. If any of the enabling devices of the TPUs connected to the safety system is deactivated, the enabling chain remains open and the move command is not executed. If the command involves a movement of the manipulator, if the command included the identity of the master TPU, and the enabling devices for all TPUs connected to the safety system are activated, the move command is executed, block 82.

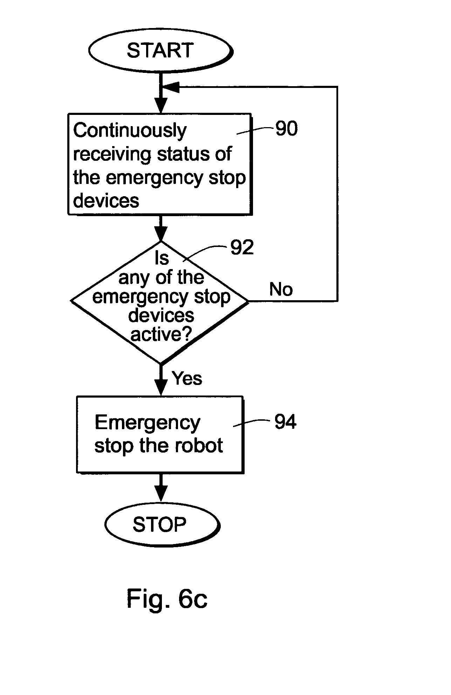

Figure 6c shows a procedure for an emergency stop command from one of the TPUs. The control unit continuously receives information about the status of the emergency stop devices from all TPUs connected to the safety system, block 90. The status includes emergency stop activated or deactivated. The control system is adapted to detect whether the received status indicates that the emergency stop device of any of the TPUs connected to the safety system is activated, block 92. If the control unit detects that one or more of the emergency stop device are activated, the emergency stop chain is closed and the robot is emergency stopped.

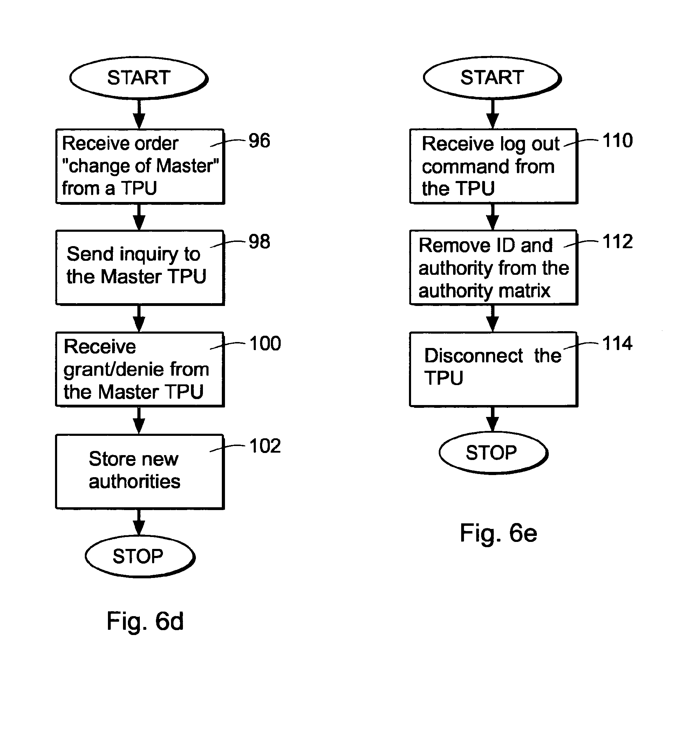

Figure 6d shows a procedure for handling an order for changing the authority of two TPUs. In this example, a TPU having a safety authority wants to change to the master authority, and the TPU having the master authority wants to change to the safety authority. It is also possible to order a change from a remote authority to a safety authority and vice versa. The control unit receives a request for changing the authority to master authority from a TPU having a safety level of authority, block 96. The control unit sends an inquiry to the Maser TPU about the change, block 98. The master TPU can choose to grant or deny the request. The control system receives the answer from the Master TPU, block 100. If the Master TPU grants the request, the new authorities are stored in the authority matrix. If the Master TPU denies the request, the authorities are not changed.

Figure 6e shows a logout procedure. When the control system receives a logout command from the TPU, block 110, the control system removes the identity and authority of the TPU from the authority matrix, block 112. Further, the control system disconnects the TPU from the safety system and logs out the operator from the control system, block 114. The safety equipment of the TPU does no longer function and the operator can no longer view data from the control unit.

According to an embodiment of the invention, the robot system is adapted to emergency stop the robot and log out all TPUs from the control unit if an error occurs with a TPU connected to the safety system. Thereafter, all the TPUs have to log in again to the control unit.

The term comprises/comprising when used in this specification is taken to specify the presence of stated features, integers, steps or components. However, the term does not preclude the presence or addition of one or more additional features, integers, steps or components or groups thereof.

The present invention is not limited to the embodiments disclosed but may be varied and modified within the scope of the following claims. For example the number of TPUs may vary in dependence on the number of operators.

## Claims

1. An industrial robot system comprising:
an industrial robot including at least one manipulator (2) and a control unit (3) for controlling the manipulator, and
at least two portable operator control devices (5a-d), called hereafter TPUs, for manually operating the robot, each TPU comprising safety equipment including a manually operated enabling device (14), which upon activation enables manual movement of the robot by means of the TPU, and the control unit comprises a safety system (33,34) which upon connection enables the safety equipment of the TPU, wherein the system is adapted to simultaneously connect said TPUs to the safety system of the control unit, wherein one of the TPUs is given a master authority, called hereafter a Master TPU, and the control unit is adapted
to receive information from all TPUs, which are simultaneously connected to said safety system, about whether the enabling device of the TPU is activated or deactivated,
to permit manual movement of the robot by the Master TPU if said received information indicates that the enabling devices for all TPUs connected to the safety system are simultaneously activated,
to not permit manual movement of the Master TPU if said information received indicates that at least one of the enabling devices is deactivated, and
to not permit manual movement of the robot by any other TPU than the Master TPU, **characterized in that** the control unit is adapted to upon order change authorities between the TPUs, so that the Master TPU does no longer have a master authority and another of the TPUs connected to the safety system instead becomes the Master TPU and have the master authority.

2. The industrial robot system according to claim 1, wherein said safety equipment comprises an emergency stop device (15) and the control unit is adapted
to receive information of from all TPUs, which are simultaneously connected to said safety system, about whether the emergency stop device of the TPU is activated or deactivated, and
to emergency stop the robot, if said received information indicates that the emergency stop device of at least one of the TPU's, connected to the safety system, is activated.

3. The industrial robot system according to claim 1 or 2, wherein the control unit is adapted to receive information from at least one of the TPUs about the change of authorities and the identity of the new Master TPU.

4. The industrial robot system according to any of the previous claims, wherein the system allows TPUs connected to the safety system to be assigned at least two different levels of authority, wherein the highest level of authority is master authority.

5. The industrial robot system according claim 4, wherein the system is adapted to allow a remote TPU to be connected to the control unit, but not to the safety system, and to assign the remote TPU a third level of authority.

6. The industrial robot system according to any of the previous claims, wherein the control unit is adapted
to check whether a move command, received from one of the TPUs, is issued by the Master TPU, and
to move the robot according to the move instruction if the move command is issued by the Master TPU, and to not move the robot if the move command is issued by a TPU which is not the Master TPU.

7. The industrial robot system according to any of the previous claims, wherein the control unit comprises a storage area (24) for storing the identity and authority of the TPUs, and the control unit is adapted to receive and store information about the identity and authority for each TPU connected to the control unit.

8. The industrial robot system according to 8, wherein the control system is adapted to upon said order to change the authorities between the TPU:s store the new authorities of the TPUs in said storage area.

9. The industrial robot system according to claim 7 or 8, wherein the control unit is adapted
to receive move commands from the TPUs, wherein the move commands include information about the identity of the TPU that issued the move command,
to check whether the identity, included in the move command, is equal to the stored identity of the Master TPU, and
to move the robot according to the move instruction if the identity included in the move command is equal to the identity of the Master TPU, and to not move the robot if the identity included in the move command is not equal to the identity of the Master TPU.

10. The industrial robot system according to any of the previous claims, wherein the TPUs are adapted to communicate wirelessly with the control unit.

11. A method for controlling an industrial robot system including an industrial robot comprising at least one manipulator and a control unit for controlling the manipulator, and at least two portable operator control devices, called hereafter TPUs, for manually operating the robot, each TPU comprising safety equipment including a manually operated enabling device, which upon activation enables manual movement of the robot by means of the TPU, and the control unit comprises a safety system which upon connection enables the safety equipment of the TPU, wherein the method comprises:
connecting the TPUs to said safety system so that they are simultaneously connected to the safety system,
receiving information about which of the connected TPUs has master authority and accordingly is Master TPU,
receiving information from all TPUs, which are simultaneously connected to said safety system, about whether the enabling device of the TPU is activated or deactivated,
receiving a move command from one of the connected TPUs,
deciding whether the move command is issued by the Master TPU or not,
executing the move command if the move command is issued by the Master TPU and said received information indicates that the enabling devices for all TPUs connected to the safety system are simultaneously activated, otherwise not executing the move command, **characterized in that** the method further comprises receiving an order to change the authorities between the TPU:s, and based thereon changing the authorities so that the Master TPU does no longer have the master authority and another of the TPUs connected to the safety system instead becomes the Master TPU and have the master authority.

12. A method according to claim 11, wherein said safety equipment comprises an emergency stop device and the method further comprises:
receiving information of from all TPUs, which are simultaneously connected to said safety system, about whether the emergency stop device of the TPU is activated or deactivated, and
executing an emergency stop of the robot, if said received information indicates that the emergency stop device of at least one of the TPUs connected to the safety system is activated.

13. The method according to any of claims 11-12, wherein the method comprises receiving information about the identity and authority of the TPUs connected to the control unit and saving the identity and authority of the connected TPUs.

14. The method according to claim 13, wherein said order to change the authorities comprises information of the identity of the new Master TPU, and the method comprises: changing the authority of the Master TPU to a lower level of authority, changing the authority of the new Master TPU to the master authority, and storing the new authorities.

15. The method according to claim 14, wherein said move commands include information about the identity of the TPU that issued the move command, and the method comprises checking whether the identity, included in the move command, is equal to the stored identity of the Master TPU, and moving the robot according to the move instruction if the identity included in the move command is equal to the identity of the Master TPU, and to not move the robot if the identity included in the move command is not equal to the identity of the Master TPU.

16. The method according to any of claims 11-15, wherein the TPU:s are assigned at least two different levels of authority, wherein the highest level of authority is the master authority.

17. The method according to claim 16, wherein the TPU/s are assigned at least three different levels of authority, wherein the lowest level of authority is a remote authority, which allows the TPU to view data from the control unit, but not to be connected to the safety system.

## Patentansprüche

1. Ein Industrierobotersystem, aufweisend:
einen Industrieroboter, der mindestens einen Manipulator (2) und eine Steuereinheit (3) zum Steuern des Manipulators beinhaltet, und
mindestens zwei tragbare Bedienersteuervorrichtungen (5a-d), die im folgenden TPUs genannt werden, zum manuellen Bedienen des Roboters, wobei jede TPU eine Sicherheitsausrüstung aufweist, die eine manuell bediente Freigabevorrichtung (14) beinhaltet, die bei Aktivierung eine manuelle Bewegung des Roboters mittels der TPU freigibt, und die Steuereinheit ein Sicherheitssystem (33, 34) aufweist, das bei Verbindung die Sicherheitsausrüstung der TPU freigibt, wobei das System daran angepasst ist, die TPUs mit dem Sicherheitssystem der Steuereinheit simultan zu verbinden, wobei einer der TPUs, die im folgenden Haupt-TPU genannt wird, eine Hauptberechtigung gegeben ist und die Steuereinheit daran angepasst ist,
Informationen von allen TPUs, die simultan mit dem Sicherheitssystem verbunden sind, darüber zu erhalten, ob die Freigabevorrichtung der TPU aktiviert oder deaktiviert ist,
eine manuelle Bewegung des Roboters mittels der Haupt-TPU zu erlauben, wenn die empfangene Information anzeigt, dass die Freigabevorrichtungen für alle TPUs, die mit dem Sicherheitssystem verbunden sind, simultan aktiviert ist,
eine manuelle Bewegung der Haupt-TPU nicht zu erlauben, wenn die empfangene Information anzeigt, dass mindestens eine der Freigabevorrichtungen deaktiviert ist, und
eine manuelle Bewegung des Roboters durch jede andere TPU als die Haupt-TPU nicht zu erlauben, **dadurch gekennzeichnet, dass** die Steuereinheit daran angepasst ist, auf Befehl die Berechtigungen zwischen den TPUs zu wechseln, so dass die Haupt-TPU nicht länger eine Hauptberechtigung hat, und eine weitere der TPUs, die mit dem Sicherheitssystem verbunden ist, stattdessen Haupt-TPU wird und die Hauptberechtigung erhält.

2. Das Industrierobotersystem gemäß Anspruch 1, wobei die Sicherheitsausrüstung eine Not-Aus-Vorrichtung (15) aufweist und die Steuereinheit daran angepasst ist,
Information von allen TPUs, die simultan mit dem Sicherheitssystem verbunden sind, darüber zu erhalten, ob die Not-Aus-Vorrichtung der TPU aktiviert oder deaktiviert ist, und
den Roboter notanzuhalten, wenn die empfangene Information anzeigt, dass die Not-Aus-Vorrichtung von mindestens einer der TPUs, die mit dem Sicherheitssystem verbunden sind, aktiviert wurde.

3. Das Industrierobotersystem gemäß Anspruch 1 oder 2, wobei die Steuereinheit daran angepasst ist, Information von mindestens einer der TPUs über den Wechsel der Berechtigungen und der Identität der neuen Haupt-TPU zu erhalten.

4. Das Industrierobotersystem gemäß einem der vorhergehenden Ansprüche, wobei das System erlaubt, dass mit dem Sicherheitssystem verbundenen TPUs mindestens zwei unterschiedliche Berechtigungsebenen zugewiesen sind, wobei die höchste Berechtigungsebene die Hauptberechtigung ist.

5. Das Industrierobotersystem gemäß Anspruch 4, wobei das System daran angepasst ist, einer Fern-TPU zu erlauben, mit der Steuereinheit aber nicht mit dem Sicherheitssystem verbunden zu sein, und der Fern-TPU eine dritte Berechtigungsebene zuzuweisen.

6. Das Industrierobotersystem gemäß einem der vorhergehenden Ansprüche, wobei die Steuereinheit daran angepasst ist,
zu überprüfen, ob ein Bewegungsbefehl, der von einem der TPUs empfangen wurde, durch die Haupt-TPU abgegeben wurde, und
den Roboter gemäß der Bewegungsanweisung zu bewegen, wenn der Bewegungsbefehl durch die Haupt-TPU abgegeben wurde, und den Roboter nicht zu bewegen, wenn der Bewegungsbefehl durch eine TPU abgegeben wurde, die nicht die Haupt-TPU ist.

7. Das Industrierobotersystem gemäß einem der vorhergehenden Ansprüche, wobei die Steuereinheit einen Speicherbereich (24) zum Speichern der Identität und der Berechtigung der TPUs aufweist und die Steuereinheit daran angepasst ist, Information über die Identität und die Berechtigung jeder TPU, die mit der Steuereinheit verbunden ist, zu empfangen und zu speichern.

8. Das Industrierobotersystem gemäß Anspruch 8, wobei das Steuersystem daran angepasst ist, bei dem Befehl die Berechtigungen zwischen den TPUs zu wechseln, die neuen Berechtigungen der TPUs in dem Speicherbereich zu speichern.

9. Das Industrierobotersystem gemäß Anspruch 7 oder 8, wobei die Steuereinheit daran angepasst ist,
die Bewegungsbefehle von den TPUs zu erhalten, wobei die Bewegungsbefehle Information über die Identität der TPU beinhalten, die den Bewegungsbefehl abgegeben hat,
zu prüfen, ob die Identität, die in dem Bewegungsbefehl beinhaltet war, gleich der gespeicherten Identität der Haupt-TPU ist, und
den Roboter gemäß der Bewegungsanweisung zu bewegen, wenn die Identität, die in dem Bewegungsbefehl beinhaltet war, gleich der Identität der Haupt-TPU ist, und den Roboter nicht zu bewegen, wenn die Identität, die in dem Bewegungsbefehl beinhaltet war, nicht gleich der Identität der Haupt-TPU ist.

10. Das Industrierobotersystem gemäß einem der vorhergehenden Ansprüche, wobei die TPUs daran angepasst sind, kabellos mit der Steuereinheit zu kommunizieren.

11. Ein Verfahren zur Steuerung eines Industrierobotersystems, beinhaltend einen Industrieroboter, der mindestens einen Manipulator und eine Steuereinheit zur Steuerung des Manipulators aufweist, und mindestens zwei tragbare Bedienersteuervorrichtungen, die im folgenden TPUs genannt werden, zum manuellen Bedienen des Roboters, wobei jede TPU eine Sicherheitsausrüstung aufweist, die eine manuell bediente Freigabevorrichtung beinhaltet, die bei Aktivierung eine manuelle Bewegung des Roboters mittels der TPU freigibt, und die Steuereinheit ein Sicherheitssystem aufweist, das bei Verbindung die Sicherheitsausrüstung der TPU freigibt, wobei das Verfahren aufweist:
Verbinden der TPUs mit dem Sicherheitssystem, so dass sie mit dem Sicherheitssystem simultan verbunden sind,
Empfangen von Information darüber, welche der verbundenen TPUs Hauptberechtigung hat und entsprechend Haupt-TPU ist,
Empfangen von Information von allen simultan mit dem Sicherheitssystem verbundenen TPUs darüber, ob die Freigabevorrichtung der TPU aktiviert oder deaktiviert ist,
Empfangen eines Bewegungsbefehls von einer der verbundenen TPUs,
Entscheiden, ob der Bewegungsbefehl durch die Haupt-TPU ausgegeben wurde oder nicht,
Ausführen des Bewegungsbefehls, wenn der Bewegungsbefehl durch die Haupt-TPU ausgegeben wurde und die empfangene Information anzeigt, dass die Freigabevorrichtungen aller mit dem Sicherheitssystem verbundenen TPUs simultan aktiviert sind, und anderenfalls den Bewegungsbefehl nicht auszuführen, **dadurch gekennzeichnet, dass** das Verfahren ferner aufweist ein Empfangen eines Befehls, die Berechtigung zwischen den TPUs zu wechseln und basierend darauf die Berechtigungen zu wechseln, so dass die Haupt-TPU nicht länger die Hauptberechtigung hat und eine andere der mit dem Sicherheitssystem verbundenen TPUs stattdessen Haupt-TPU wird und die Hauptberechtigung hat.

12. Ein Verfahren gemäß Anspruch 11, wobei die Sicherheitsausrüstung eine Not-Aus-Vorrichtung aufweist und das Verfahren ferner aufweist:
Empfangen von Information von allen TPUs, die simultan mit dem Sicherheitssystem verbunden sind, darüber, ob die Not-Aus-Vorrichtung der TPU aktiviert oder deaktiviert ist, und
Ausführen eines Nothaltens des Roboters, wenn die empfangene Information anzeigt, dass die Not-Aus-Vorrichtung von mindestens einer der TPUs, die mit dem Sicherheitssystem verbunden sind, aktiviert ist.

13. Das Verfahren gemäß einem der Ansprüche 11 bis 12, wobei das Verfahren Empfangen von Information über die Identität und die Berechtigung der TPUs, die mit der Steuereinheit verbunden sind, und Speichern der Identität und der Berechtigung der verbunden TPUs beinhaltet.

14. Das Verfahren gemäß Anspruch 13, wobei der Befehl die Berechtigungen zu ändern, Information über die Identität der neuen Haupt-TPU beinhaltet und das Verfahren aufweist:
Wechseln der Berechtigung der Haupt-TPU auf eine niedrigere Berechtigungsebene, Wechseln der Berechtigung der neuen Haupt-TPU zur Hauptberechtigung und Speichern der neuen Berechtigungen.

15. Das Verfahren gemäß Anspruch 14, wobei der Bewegungsbefehl Information über die Identität der TPU beinhaltet, die den Bewegungsbefehl abgegeben hat, und das Verfahren ein Überprüfen, ob die Identität, die in dem Bewegungsbefehl beinhaltet war, gleich der gespeicherten Identität der Haupt-TPU ist, und Bewegen des Roboters gemäß der Bewegungsanweisung, wenn die Identität, die in dem Bewegungsbefehl beinhaltet war, gleich der Identität der Haupt-TPU ist, und den Roboter nicht zu bewegen, wenn die Identität, die in dem Bewegungsbefehl beinhaltet war, nicht gleich der Identität der Haupt-TPU ist, aufweist.

16. Das Verfahren gemäß einem der Ansprüche 11 bis 15, wobei den TPUs mindestens zwei unterschiedliche Berechtigungsebenen zugewiesen sind, wobei die höchste Berechtigungsebene die Hauptberechtigung ist.

17. Das Verfahren gemäß Anspruch 16, wobei den TPUs mindestens drei unterschiedliche Berechtigungsebenen zugewiesen sind, wobei die niedrigste Berechtigungsebene eine Fern-Berechtigung ist, die es der TPU erlaubt, Daten von der Steuereinheit zu sehen, aber nicht mit dem Sicherheitssystem verbunden zu sein.

## Revendications

1. Système robotique industriel comprenant :
un robot industriel comprenant au moins un manipulateur (2) et une unité de commande (3) pour commander le manipulateur, et
au moins deux dispositifs de commande (5a-d) portatifs pour un opérateur, dénommés ci-après TPU, pour actionner manuellement le robot, chaque TPU comprenant un équipement de sécurité incluant un dispositif d'habilitation (14) actionné manuellement, qui, lorsqu'il est activé, autorise un mouvement manuel du robot au moyen du TPU, et l'unité de commande comprend un système de sécurité (33, 34) qui, lors de sa connexion, active l'équipement de sécurité du TPU, le système étant adapté pour permettre la connexion simultanée du ou desdits TPU au système de sécurité de l'unité de commande, l'un des TPU, dénommé ci-après TPU maître, ayant été pourvu d'une autorité principale, et l'unité de commande est adaptée :
pour recevoir les informations de tous les TPU, qui sont simultanément connectés audit système de sécurité, selon lesquelles le dispositif d'habilitation du TPU est activé ou désactivé,
pour autoriser le mouvement manuel du robot par le TPU maître si lesdites informations reçues indiquent que les dispositifs d'habilitation pour tous les TPU connectés au système de sécurité sont simultanément activés,
pour ne pas autoriser le mouvement manuel du TPU maître si lesdites informations reçues indiquent qu'au moins un des dispositifs d'habilitation est désactivé, et
pour ne pas autoriser le mouvement manuel du robot par l'un quelconque des TPU autre que le TPU maître, **caractérisé en ce que** l'unité de commande est adaptée pour, sur commande, changer les niveaux d'autorité entre les TPU de telle sorte que le TPU maître n'ait plus d'autorité principale et qu'un autre TPU connecté au système de sécurité devienne, à la place de celui-ci, le TPU maître et ait l'autorité principale.

2. Système robotique industriel selon la revendication 1, dans lequel ledit équipement de sécurité comprend un dispositif d'arrêt d'urgence (15) et l'unité de commande est adaptée :
pour recevoir des informations de tous les TPU qui sont simultanément connectés audit système de sécurité, selon lesquelles le dispositif d'arrêt d'urgence du TPU est activé ou désactivé, et
pour arrêter d'urgence le robot, si lesdites informations reçues indiquent que le dispositif d'arrêt d'urgence d'au moins l'un des TPU, connecté au système de sécurité, est activé.

3. Système robotique industriel selon la revendication 1 ou 2, dans lequel l'unité de commande est adaptée pour recevoir des informations d'au moins un des TPU relatives au changement de niveau d'autorité et à l'identité du nouveau TPU maître.

4. Système robotique industriel selon l'une quelconque des revendications précédentes, dans lequel le système autorise l'attribution aux TPU connectés au système de sécurité d'au moins deux niveaux différents d'autorisation, le niveau d'autorité le plus élevé étant l'autorité principale.

5. Système robotique industriel selon la revendication 4, dans lequel le système est adapté pour permettre à un TPU distant d'être connecté à l'unité de commande, mais pas au système de sécurité, et pour attribuer au TPU distant un troisième niveau d'autorisation.

6. Système robotique industriel selon l'une quelconque des revendications précédentes, dans lequel l'unité de commande est adaptée :
pour vérifier si une commande de mouvement, reçue de l'un des TPU, est émise par le TPU maître, et
pour déplacer le robot selon l'instruction de mouvement si la commande de mouvement est émise par le TPU maître, et ne pas déplacer le robot si la commande de mouvement est émise par un TPU qui n'est pas le TPU maître.

7. Système robotique industriel selon l'une quelconque des revendications précédentes, dans lequel l'unité de commande comprend une zone de stockage (24) pour stocker l'identité et le niveau d'autorité des TPU, et l'unité de commande est adaptée pour recevoir et stocker des informations sur l'identité et le niveau d'autorité pour chaque TPU connecté à l'unité de commande.

8. Système robotique industriel selon la revendication 8, dans lequel le système de commande est adapté pour, à réception de ladite commande, changer les niveaux d'autorité entre les TPU et stocker les nouveaux niveaux d'autorité des TPU dans ladite zone de stockage.

9. Système robotique industriel selon la revendication 7 ou la revendication 8, dans lequel l'unité de commande est adaptée :
pour recevoir des commandes de mouvement des TPU, les commandes de mouvement incluant des informations sur l'identité du TPU qui a émis la commande de mouvement,
pour vérifier si l'identité, incluse dans la commande de mouvement, est égale à l'identité du TPU maître stockée, et
pour déplacer le robot selon l'instruction de mouvement si l'identité incluse dans la commande de mouvement est égale à l'identité du TPU maître, et ne pas déplacer le robot si l'identité incluse dans la commande de mouvement n'est pas égale à l'identité du TPU maître.

10. Système robotique industriel selon l'une quelconque des revendications précédentes, dans lequel les TPU sont adaptés pour communiquer sans fil avec l'unité de commande.

11. Procédé pour commander un système robotique industriel comprenant un robot industriel comprenant au moins un manipulateur et une unité de commande pour commander le manipulateur, et au moins deux dispositifs de commande portatifs pour opérateur, dénommés ci-après TPU, pour actionner manuellement le robot, chaque TPU comprenant un équipement de sécurité comprenant un dispositif d'habilitation actionné manuellement, qui, lorsqu'il est activé, autorise le mouvement manuel du robot au moyen du TPU, et l'unité de commande comprend un système de sécurité qui, lors de la connexion, active l'équipement de sécurité du TPU ; lequel procédé comprend les étapes de :
connexion des TPU audit système de sécurité de telle sorte qu'ils soient simultanément connectés au système de sécurité,
réception des informations pour savoir lequel des TPU connectés a l'autorité principale et est par conséquent le TPU maître,
réception des informations de tous les TPU qui sont simultanément connectés audit système de sécurité, selon lesquelles le dispositif d'habilitation du TPU est activé ou désactivé,
réception d'une commande de mouvement de l'un des TPU connectés,
détermination selon que la commande de mouvement est émise par le TPU maître ou pas,
exécution de la commande de mouvement si la commande de mouvement est émise par le TPU maître et si lesdites informations reçues indiquent que les dispositifs d'habilitation pour tous les TPU connectés au système de sécurité sont simultanément activés ; sinon, non exécution de la commande de mouvement, **caractérisé en ce que** le procédé comprend en outre l'étape de réception d'une commande pour changer les niveaux d'autorité entre les TPU, et, sur cette base, changer les niveaux d'autorité de telle sorte que le TPU maître n'ait plus l'autorité principale et qu'un autre TPU connecté au système de sécurité devienne, à la place de celui-ci, le TPU maître et ait l'autorité principale.

12. Procédé selon la revendication 11, dans lequel ledit équipement de sécurité comprend un dispositif d'arrêt d'urgence et le procédé comprend en outre les étapes :
de réception des informations de tous les TPU qui sont simultanément connectés audit système de sécurité, selon lesquelles le dispositif d'arrêt d'urgence des TPU est activé ou désactivé, et
d'exécution d'un arrêt d'urgence du robot, si lesdites informations reçues indiquent que le dispositif d'arrêt d'urgence d'au moins un des TPU connectés au système de sécurité est activé.

13. Procédé selon l'une quelconque des revendications 11 à 12, dans lequel le procédé comprend l'étape de réception des informations sur l'identité et le niveau d'autorité des TPU connectés à l'unité de commande et sauvegarder l'identité et le niveau d'autorité des TPU connectés.

14. Procédé selon la revendication 13, dans lequel ladite commande pour changer les autorisations comprend les informations relatives à l'identité du nouveau TPU maître, et le procédé comprend les étapes de : changement du niveau d'autorité du TPU maître vers un niveau d'autorité plus faible, changement du niveau d'autorité du nouveau TPU maître en autorité principale, et stockage des nouveaux niveaux d'autorité.

15. Procédé selon la revendication 14, dans lequel lesdites commandes de mouvement incluent des informations sur l'identité du TPU qui a émis la commande de mouvement, et le procédé comprend l'étape de vérification si l'identité, incluse dans la commande de mouvement, est égale à l'identité du TPU maître stockée, et de mouvement du robot selon l'instruction de mouvement si l'identité incluse dans la commande de mouvement est égale à l'identité du TPU maître, et de non mouvement du robot si l'identité incluse dans la commande de mouvement n'est pas égal à l'identité du TPU maître.

16. Procédé selon l'une quelconque des revendications 11 à 15, dans lequel il est attribué aux TPU au moins deux niveaux différents d'autorité, dans lequel le plus haut niveau d'autorité est l'autorité principale.

17. Procédé selon la revendication 16, dans lequel il est attribué aux TPU au moins trois niveaux différents d'autorité, le niveau d'autorité le plus bas étant une autorité distante, qui autorise le TPU à voir des données provenant de l'unité de commande, mais pas à être connecté au système de sécurité.
